# FASCICULE DE BREVET EUROPEEN

(11) **EP 3 944 982 B1**
(45) Date de publication et mention de la délivrance du brevet: **16.10.2024**
(21) Numéro de dépôt: 21188734.4
(22) Date de dépôt: 30.07.2021
(51) Int. Cl.: B60L 53/14, B60L 53/30, B60L 53/60, H02J 7/02, B60L 53/67, H02J 1/00

(54) **SYSTÈME DE RECHARGE MULTIPOINT PARTAGÉ DE VÉHICULES ÉLECTRIQUES**
GEMEINSAMES MEHRPUNKT-LADESYSTEM FÜR ELEKTROFAHRZEUGE
SHARED MULTIPOINT RECHARGING SYSTEM FOR ELECTRIC VEHICLES

(30) Priorité: 30.07.2020 FR 2008132
(43) Date de publication de la demande: 02.02.2022
(73) Titulaire: J.D.B. Groupe, 17240 Saint-Genis-de-Saintonge (FR)
(72) Inventeur: MARTIN, Jean-Christophe, 17500 JONZAC (FR)
(74) Mandataire: Brevalex

(56) Documents cités:
- WO-A1-2017/096208
- DE-A1- 102018 126 787
- JP-A- 2012 147 555
- US-A1- 2016 144 728

## Description

### DOMAINE TECHNIQUE

La présente invention concerne de manière générale des systèmes de recharge de véhicules électriques (ou VE) et plus particulièrement les systèmes de recharge multipoint.

### ÉTAT DE LA TECHNIQUE ANTÉRIEURE

Avec l'expansion du parc des véhicules électriques (VE), que ce soit à destination des particuliers ou des entreprises, les besoins en recharge de batteries se sont considérablement accrus ces dernières années. L'autonomie encore relativement modeste de ces véhicules rend les opérations de recharge fréquentes et nécessite de densifier les infrastructures de recharge.

Pour faire face à ces besoins, les places de stationnement, notamment les parkings privés des logements collectifs et ceux des entreprises, sont des lieux tout indiqués pour y installer des bornes de recharge. Ainsi, les logements collectifs nouvellement construits ont désormais l'obligation d'équiper 10% des emplacements des parcs clos et couverts pour accueillir des systèmes recharge de véhicules électriques.

Les solutions actuellement déployées dans les parkings privés sont généralement des bornes de recharge murales, de type « *wallbox* », installées à chaque place de stationnement. Ces bornes de recharge, connectées au réseau d'alimentation électrique peuvent être équipées dans certains cas de deux points de charge (PDC) permettant de recharger deux véhicules côte à côte. Il existe également sur le marché des bornes de recharge pour lesquelles chacun des points de charge est équipé de deux prises, permettant d'effectuer une charge, soit par l'une, soit par l'autre prise.

Une borne de recharge dispose classiquement d'une carte électronique de contrôle (dite carte mode 3) assurant l'interface avec le véhicule électrique. Outre la génération du signal de charge PWM (*Pulse Width Modulation*) proprement dit, la carte de contrôle assure la communication d'informations entre la borne et le véhicule électrique (transmission d'informations relatives à la configuration de la borne et réception d'informations relatives à l'état de charge du véhicule), et la protection électrique.

Afin de réduire les coûts associés à l'infrastructure de recharge, il est connu, comme indiqué plus haut, de prévoir plusieurs points de charge par borne, chaque point de charge étant alors équipé de sa propre carte de contrôle et offrant une voie de charge à laquelle peut se brancher un véhicule. Les différentes voies de charge sont ainsi indépendantes les unes des autres, moyennant un contrôle global de la puissance consommée au niveau de la borne.

Plus récemment, il a été proposé dans la demande internationale WO-A-2017/096208 une carte de contrôle multivoie, c'est à dire une carte de contrôle contrôlant une pluralité de voies de charge en parallèle, soit à tour de rôle, soit en répartissant le courant de charge entre les différentes voies de charge.

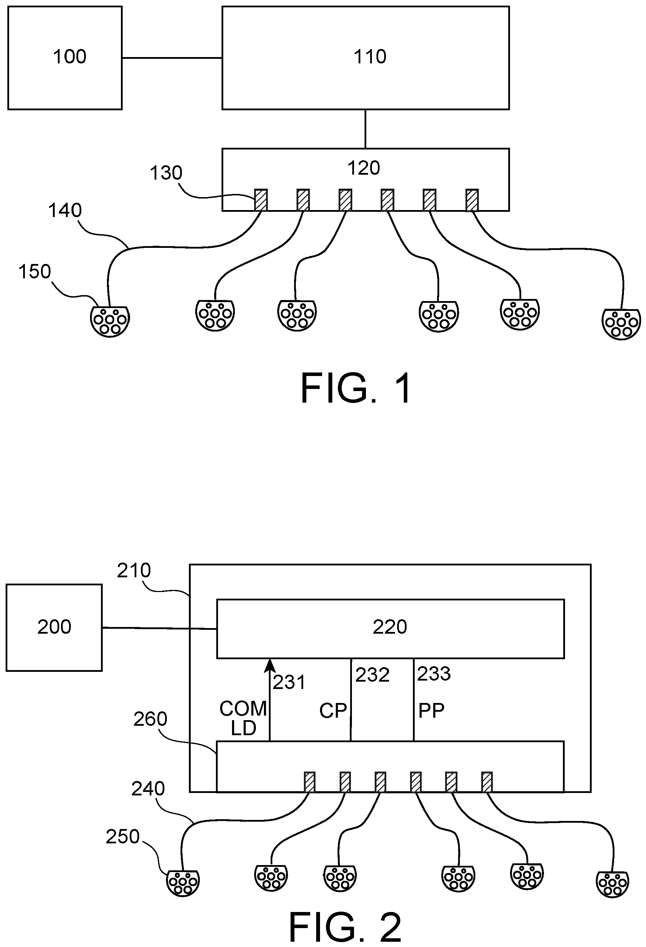

Une borne de recharge équipée d'une telle carte de contrôle a été représentée en Fig. 1. La borne de recharge, 110, est alimentée par une source d'alimentation AC, 100, et est équipée d'une carte de contrôle multivoie, 120, chaque voie étant associée à un point de charge, 130, auquel est connecté de manière permanente un câble de recharge, 140, se terminant par une prise, 150, destinée à être branchée sur un véhicule électrique (VE). Les différentes voies de charge peuvent être séquentiellement activées de manière à fournir tout à tour un courant de charge aux véhicules qui y sont respectivement branchés.

Si cette solution permet effectivement de réduire le nombre de cartes de contrôle, elle présente en pratique de sérieux inconvénients.

En effet, dans un tel système, lorsque les voies de charge sont séquentiellement activées, la déconnexion d'un véhicule à sa voie de charge entraîne une réinitialisation du système de gestion de charge embarqué. Sa déconnexion lance un processus de contrôle du raccordement entre la borne et le véhicule qui peut durer plusieurs dizaines de secondes, réduisant d'autant l'efficacité de la recharge. En outre, si l'on augmente la durée d'activation d'une voie de charge, la durée pendant laquelle les autres voies sont inactives est corrélativement augmentée. Dans certains cas, si la voie de recharge est inactive pendant plusieurs minutes, le système embarqué de gestion de charge peut basculer en mode sommeil pour des raisons d'économie d'énergie. Une nouvelle connexion à la voie de charge suppose alors une phase de réveil pouvant durer plusieurs dizaines de secondes. Enfin, lorsqu'un véhicule est déconnecté de sa voie de charge de manière intempestive, son système embarqué de gestion de charge peut se mettre en mode erreur, ce qui conduit à un refus temporaire voire définitif de raccordement et un blocage du processus d'activation séquentielle. Il est alors nécessaire de réinitialiser le système embarqué de gestion de charge pour faire disparaître cette erreur et reprendre le processus d'activation séquentielle des voies de charge.

Enfin, la carte de contrôle multivoie ne permet pas de réaliser facilement un système de recharge scalable dans la mesure où le nombre de voies de charge est fixé une fois pour toutes sur une carte.

L'objet de la présente invention est par conséquent de proposer un système de recharge multipoint partagé, qui ne présente pas les inconvénients de l'état de la technique, notamment en ce qu'il ne conduit pas à un risque élevé de suspension voire d'interruption de la charge des véhicules branchés à ce système lors d'une activation séquentielle des voies de charge. Un but subsidiaire de la présente invention est d'optimiser la charge des véhicules raccordées aux différentes voies du système de recharge.

### EXPOSÉ DE L'INVENTION

La présente invention est définie par un système de recharge pour véhicules électriques, ledit système de recharge comprenant au moins une borne de recharge, alimentée par au moins une source d'alimentation, ladite borne de recharge comprenant au moins un module de contrôle de charge monovoie, le système de recharge comprenant en outre :
- un module de commutation de charge relié au module de contrôle de charge monovoie et recevant de celui-ci un signal de contrôle de charge sur une voie de contrôle commune, le module de commutation de charge comportant une pluralité de voies de charge, chaque voie de charge comprenant une voie de contrôle de charge ;
- une pluralité de relais de puissance commandés par le module de commutation de charge, chaque relais de puissance étant associé à une voie de charge et destiné à connecter, en position fermée, ou déconnecter, en position ouverte, la source d'alimentation à une batterie de l'un desdits véhicules électriques ;
le module de commutation comprenant :
- une pluralité de circuits d'émulation de pause de charge, chaque circuit d'émulation de mode pause de charge étant associé à une voie de contrôle de charge ;
- une pluralité de commutateurs, chaque commutateur étant associé à une voie de contrôle de charge et présentant un premier état de commutation dans lequel la voie de contrôle de charge est connectée à la voie de contrôle commune et un second état de commutation dans lequel cette voie de contrôle de charge est connectée au circuit d'émulation de pause de charge associé à ladite voie ;
- un module d'ordonnancement contrôlant les états de commutation successifs des différents commutateurs et des différents relais de puissance pendant une séquence d'intervalles de charge, de sorte que, pendant un intervalle de charge attribué à une voie de charge, le commutateur associé à la voie de contrôle de charge correspondante soit dans le premier état de commutation et les autres commutateurs de la pluralité soient dans le second état de commutation, et que relais de puissance associé à la voie de charge soit en position fermée, les relais de puissance associés aux autres voies de la pluralité étant en position ouverte.

Typiquement, le module de contrôle monovoie est un module de contrôle mode 3 tel que défini dans la norme IEC 61851-1.

Avantageusement, chaque circuit d'émulation de pause de charge comporte une borne reliée à une tension d'alimentation de +12V à travers une résistance de rappel, ladite borne étant connectée à la voie de contrôle de charge au moyen du commutateur associé à cette voie lorsque ce dernier est dans le second état de commutation.

Alternativement, chaque circuit comporte une source de courant et une résistance de rappel montée en parallèle entre la masse et une borne commune, ladite borne commune étant connectée à la voie de contrôle de charge au moyen du commutateur associé à cette voie lorsque ce dernier est dans le second état de commutation.

Le module d'ordonnancement reçoit des mesures de tension sur chacune des voies de contrôle de charge (MES CP VE₁,..., MES CP VE _{N}) et en déduit les véhicules branchés à la borne de recharge et, par suite, les voies de charge à commuter pendant ladite séquence d'intervalles de charge.

Le module d'ordonnancement détermine notamment les durées des intervalles de charge attribués aux différentes voies et/ou leurs fréquences de récurrence respectives en fonction au moins du nombre de véhicules branchés à la borne de recharge.

Selon un exemple de réalisation, le module d'ordonnancement déduit des mesures de tension sur chacune des voies de contrôle de charge (MES CP VE₁,..., MES CP VE _{N}) les durées des intervalles de charge attribués aux différentes voies et/ou leurs fréquences de récurrence respectives.

Avantageusement, le module d'ordonnancement détermine les durées des intervalles de charge attribués aux différentes voies et/ou leurs fréquences de récurrence respectives en fonction d'au moins un critère parmi un ensemble de critères comprenant un niveau de priorité demandé pour la charge, un niveau de tarification horaire de la fourniture d'énergie, un temps de stationnement estimé du véhicule électrique, un kilométrage à parcourir jusqu'à destination du prochain point de charge, les caractéristiques de la batterie à recharger.

Selon une première variante, la borne de recharge est équipée d'une interface homme machine permettant à un usager de renseigner au moins un critère dudit ensemble de critères.

Selon une seconde variante, la borne de recharge est connectée à travers un réseau filaire ou sans fil, à un serveur de gestion de charge, auprès duquel un usager peut s'identifier et s'authentifier, puis renseigner un profil de charge comprenant au moins un critère dudit ensemble de critères, ledit profil de charge étant ensuite transmis à la borne de recharge.

La borne de recharge peut en outre stocker les valeurs d'une pluralité de paramètres de charge au cours d'une session de charge d'un véhicule et stocker un journal de charge comprenant un historique de ces paramètres dans une mémoire locale et/ou dans une base de données hébergée par le serveur de gestion.

### BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :
La Fig. 1, déjà décrite, représente de manière schématique l'architecture d'un système de recharge de véhicules électriques multipoint connu de l'état de la technique ;
La Fig. 2 représente de manière schématique l'architecture d'un système de recharge de véhicules électriques multipoint partagé selon un mode de réalisation préféré de la présente invention ;
La Fig. 3A représente de manière schématique la structure d'un premier exemple de module de commutation de charge utilisé dans le système de recharge de la Fig. 2 ;
La Fig. 3B représente de manière schématique la structure d'un deuxième exemple de module de commutation de charge utilisé dans le système de recharge de la Fig. 2 ;
La Fig. 3C représente de manière schématique la structure d'un troisième exemple du module de commutation de charge utilisé dans le système de recharge de la Fig. 2 ;
La Fig. 3D représente de manière schématique la structure d'un quatrième exemple du module de commutation de charge utilisé dans le système de recharge de la Fig. 2 ;
La Fig. 4 représente de manière schématique un exemple de connexion entre une carte de contrôle mode 3 et un véhicule électrique.

### EXPOSÉ DÉTAILLÉ DE MODES DE RÉALISATION PARTICULIERS

Nous considérerons dans la suite un système de recharge pour véhicule électrique tel que défini dans la partie introductive. Ce système de recharge comprend au moins une source d'alimentation en courant alternatif monophasé ou triphasé alimentant une borne de recharge. L'invention s'applique plus particulièrement à une borne de recharge opérant en mode 3 tel que défini dans la norme IEC 61851-1 établie par le comité sur les systèmes de recharge conductifs de véhicules électriques (*Electric vehicle conductive charging systems*). Le cas échéant, le système de recharge peut comprendre une pluralité de sources d'alimentation, telles qu'une alimentation classique AC du secteur, un point de livraison particulier de courant AC, une alimentation DC suivie d'un inverseur (intégré ou non à la borne de recharge), un système de stockage d'énergie associé par exemple à des panneaux photovoltaïques ou à une éolienne.

Le système de recharge peut en outre disposer de moyens pour contrôler les paramètres de puissance et de durée de charge en fonction des plages horaires et, le cas échéant, de leurs tarifications respectives. Ainsi, une ou plusieurs bornes de recharge du système pourront sélectionner telle ou telle source d'alimentation en fonction de leurs besoins respectifs de puissance en sélectionnant la source la moins coûteuse dans la plage horaire considérée. Cette sélection peut le cas échéant être supervisée par un serveur distant ou bien être effectuée par la borne elle-même après interrogation de ce serveur.

La Fig. 2 représente l'architecture d'un système de recharge de véhicules électriques multipoint partagé selon un mode de réalisation de la présente invention.

Pour des raisons de simplification une seule source d'alimentation, 200, a été représenté mais, comme indiqué plus haut, le système de recharge peut comprendre différentes sources connectées à la borne de recharge 210 au-travers de moyens intelligents de sélection de ces sources.

La borne de recharge comprend un module de contrôle, 220, pour gérer de manière mutualisée la charge des différentes voies de charge. Le module de contrôle est typiquement constitué par une carte de contrôle mode 3, connue en soi. Ce module de contrôle est relié au module de commutation de charge, 260, par une liaison bidirectionnelle, 232, dénommée dans la suite voie de contrôle commune (ou mutualisée) portant un signal pilote CP, une liaison auxiliaire, 233, portant un signal PP indiquant le courant maximal que peut supporter le câble, et une liaison 231 fournissant à la carte mode 3 un signal de commutation de charge, COM LD, détaillé plus loin.

Le cas échéant, un module de mesure (non représenté) mesure le courant électrique (monophasé ou triphasé) fourni au module de distribution et coupe l'alimentation électrique en cas de fuites de courant à la terre (protection par disjoncteur différentiel). A cette protection différentielle peut s'ajouter un disjoncteur électromécanique conventionnel pour la protection contre les surintensités.

Le module de commutation de charge, 260, alimente tour à tour les différentes voies de charge 240, selon un ordonnancement fonction notamment du nombre de véhicules électriques connectés et de différentes informations remontées par ces véhicules. En particulier, le module de commutation de charge commute l'alimentation AC (monophasée ou triphasée) vers les différentes voies de charge 240 au moyen de relais de puissance (non représentés sur cette figure).

On comprendra en particulier que le module de commutation de charge, 260, permet de n'utiliser qu'une seule carte de contrôle monovoie, 220, pour contrôler la charge d'une pluralité de véhicules, cette charge étant réalisée de manière séquentielle selon un processus décrit ci-après. Le cas échéant, la borne de recharge pourra comprendre une pluralité de modules de contrôle indépendants, c'est-à-dire en pratique des cartes de contrôle mode 3 monovoie, distinctes, chaque module de contrôle alimentant un module associé de commutation de charge.

Chaque voie de charge est matérialisée en pratique par un câble /prise électrique mode 3, que peut brancher un automobiliste sur une prise locale ou déportée de la borne, associée au point de charge. Ainsi par exemple la borne de recharge pourra se présenter sous la forme d'une armoire protégée, à l'abri des détériorations, seules les prises déportées étant accessibles au niveau de places de stationnement.

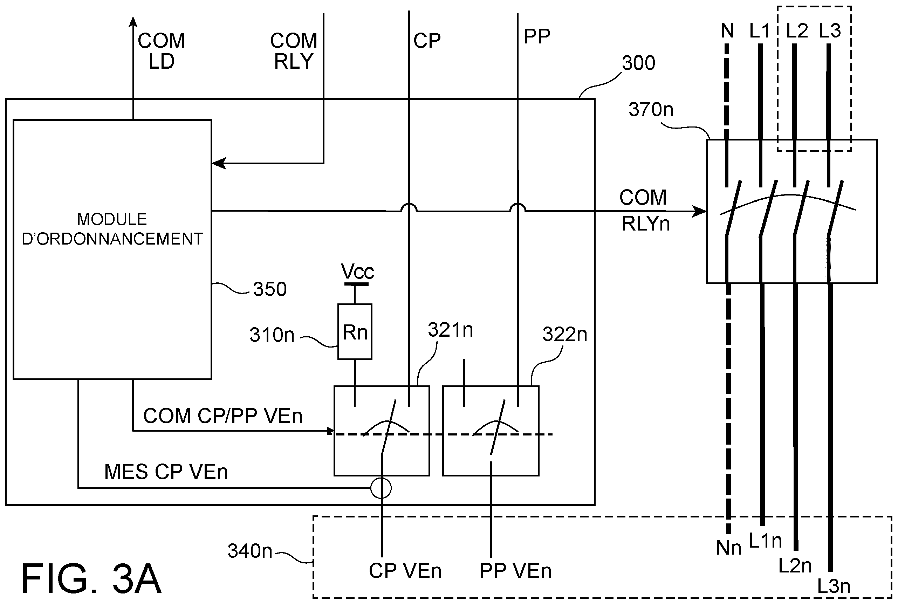

La Fig. 3A représente de manière schématique la structure d'un premier exemple de module de commutation de charge utilisé dans le système de recharge de la Fig. 2.

Le module de commutation de charge, 300, comprend une pluralité de commutateurs, 321ₙ, n=1,...N, ces commutateurs étant contrôlés par un module d'ordonnancement, 350, chaque commutateur 321ₙ, étant associé à une voie de contrôle de charge. Pour des raisons de simplification de la présentation, seule une voie de charge a été représentée sur la figure. Le module de commutation de charge comprend également une pluralité de commutateurs auxiliaires, 322ₙ, n=1,...N, chaque commutateur étant associé à une voie de contrôle de charge. Le signal de commutation commun des commutateurs 321ₙ et 322ₙ a été noté COM CP/PP VEₙ.

Le module d'ordonnancement contrôle la commutation d'une pluralité de relais de puissance, 370ₙ, n=1,...N, chaque relais de puissance étant associé à une voie de charge.

Le module d'ordonnancement 350 reçoit en entrée une mesure des signaux de contrôle des voies de charge, dits signaux pilotes CP VE₁,...,CP VE_{N}. Les mesures respectives des signaux pilotes des véhicules connectés aux différentes voies de charge sont notés MES CP VE₁,...,MES CP VE_{N}. A partir de la mesure MES CP VEₙ relative à la voie de charge 340ₙ, le module d'ordonnancement peut déterminer si un véhicule est branché ou non sur cette voie. En particulier, dans le cas d'une carte de contrôle mode 3, si la tension sur le fil pilote est de +12 V, le module d'ordonnancement en conclut qu'aucun véhicule est connecté à la voie de charge en question et si cette tension est inférieure ou égale à 9V, il en conclut qu'un véhicule est connecté à cette voie de charge. Le module d'ordonnancement connaît par conséquent en temps réel le nombre de véhicules branchés à la borne et à quelles voies de charge ils sont connectés. En outre, la présence ou non d'un signal PWM permet au module d'ordonnancement de savoir si la borne demande au véhicule de suspendre ou lancer la charge.

D'autres types de capteurs pourront être prévus sur chacune des voies de charge, notamment pour surveiller et protéger les différentes voies de charge, par exemple des capteurs de température permettant de protéger la voie de charge en cas de surchauffe.

Une caractéristique importante de l'invention réside dans le fait que le module de commutation de charge comprend des circuits d'émulation de mode pause de charge 310₁,...,310_{N} associés aux différentes voies de charge. Lorsque le commutateur 321ₙ est dans un premier état de commutation, le signal pilote CP VEₙ de la voie de contrôle de charge n est identique au signal pilote CP du module de contrôle commun. En revanche, lorsque le commutateur 321ₙ de cette voie de contrôle de charge est dans un second état de commutation, le signal pilote CP VEₙ est forcé à +12V par le circuit d'émulation de mode pause 310ₙ associée à ladite voie. Dans ce second état de commutation, tout se passe, du côté du véhicule, comme si la borne de charge le mettait en pause de charge, sans déconnexion de sa voie de charge.

De manière similaire, lorsque le commutateur auxiliaire 322ₙ est dans un premier état de commutation, le signal PP VEₙ est identique au signal PP du module de contrôle et lorsque le commutateur auxiliaire 322ₙ est dans un second état de commutation, la liaison portant le signal PP est dans un état haute impédance.

A chaque instant, le module d'ordonnancement ne place qu'un seul commutateur 321ₙ (resp. commutateur auxilaire 322ₙ) dans son premier état de commutation, les autres commutateurs étant placés dans le second état de commutation.

Le circuit d'émulation de mode pause pourra être simplement constitué d'une simple résistance de rappel (1kΩ par exemple) reliée à la tension d'alimentation V_{cc} (12V), comme indiqué sur le schéma.

Alternativement (variante de réalisation non représentée), le circuit d'émulation de pause pourra être simplement constituée d'une résistance de rappel (1kΩ par exemple) montée en parallèle avec une source de courant (12mA) entre une borne commune et la masse.

Le module d'ordonnancement 350 génère en outre un signal de commutation de charge COM LD à chaque fois qu'il prépare un changement de voie de charge au cours du séquencement. Plus précisément, le module de contrôle (carte mode 3) demande au véhicule via le signal CP de suspendre la charge en cours puis génère un signal général de commutation de relais de puissance COM RLY (commun à toutes les voies de charge comme le signal CP) après avoir coupé l'alimentation AC. Le module d'ordonnancement désélectionne ensuite la voie n en commutant le relais de puissance 370ₙ au moyen d'un signal de commutation du relais de puissance COM RLYn, associé à la voie n, puis sélectionne la voie suivante dans le séquencement en commutant le relais de puissance correspondant COM RLYn', et enfin applique l'alimentation AC.

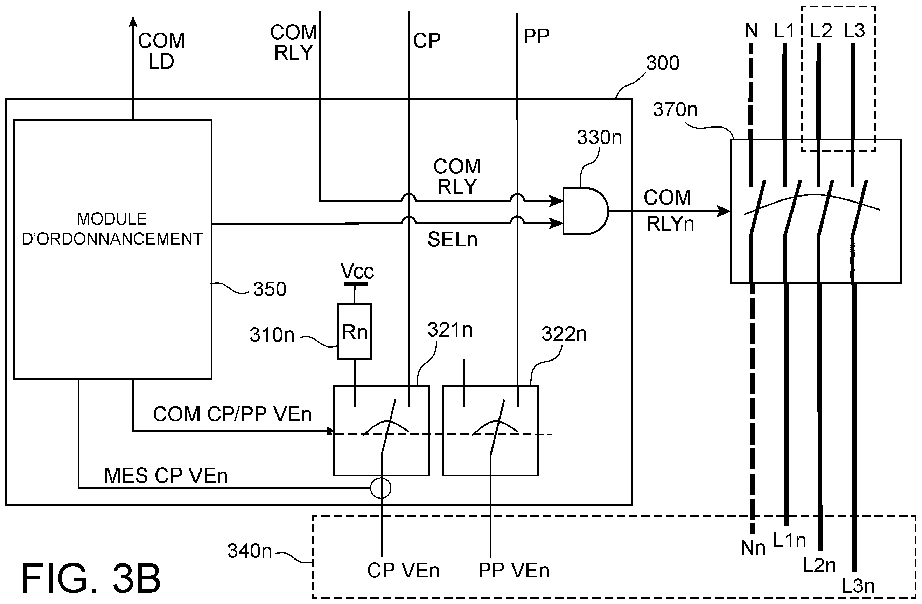

La Fig. 3B représente de manière schématique la structure d'un deuxième exemple de module de commutation de charge utilisé dans le système de recharge de la Fig. 2.

Les éléments identiques à ceux de la Fig. 3A portent les mêmes signes de référence.

Ce deuxième exemple diffère du premier en ce que le signal de commutation du relais de puissance, COM RLYn, est obtenu ici hors du module d'ordonnancement, en effectuant une combinaison logique dans une porte logique ET, 330n, entre le signal général de commutation de relais COM RLY généré par le module de contrôle et un signal de sélection de voie de charge, SELn, généré par le module d'ordonnancement. Le signal de sélection de voie de charge SELn est à l'état logique haut pendant que les signaux de sélection des autres voies de charge SELn', n'≠n, sont à l'état logique bas.

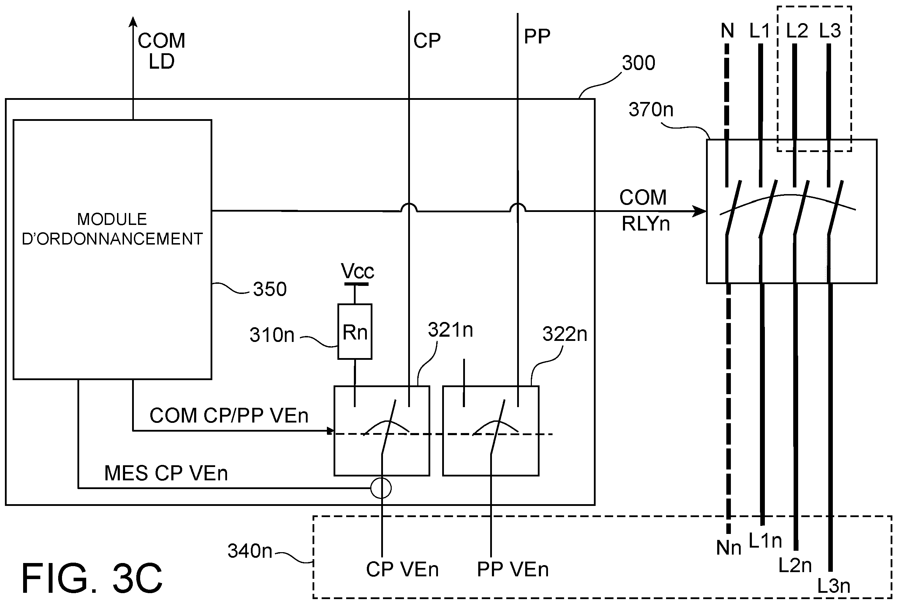

La Fig. 3C représente de manière schématique la structure d'un troisième exemple de module de commutation de charge utilisé dans le système de recharge de la Fig. 2.

Les éléments identiques à ceux des Figs. 3A-3B portent les mêmes signes de référence.

Dans cet exemple de réalisation, le module d'ordonnancement génère de manière autonome le signal de commutation du relais de puissance de chacune des voies. Autrement dit, le module d'ordonnancement utilise directement le signal de mesure MES CP VEn pour générer le signal de commutation du relais de puissance, COM RLYn, associé à la voie de charge n.

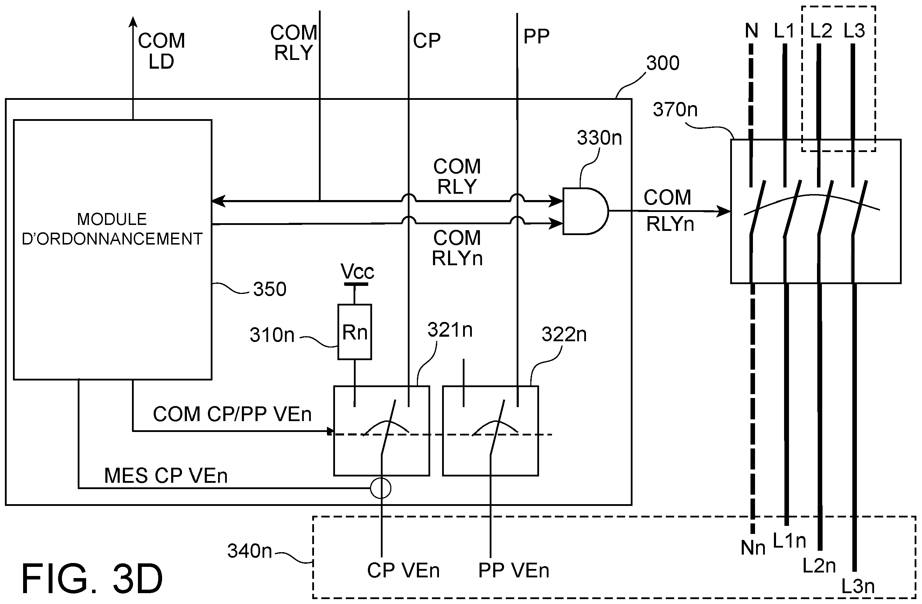

La Fig. 3D représente de manière schématique la structure d'un quatrième exemple de module de commutation de charge utilisé dans le système de recharge de la Fig. 2.

Les éléments identiques à ceux des Figs. 3A-3C portent les mêmes signes de référence.

Cet exemple de réalisation est une combinaison redondante du premier et du troisième exemple de réalisation, afin d'obtenir un niveau de sécurité plus élevé.

Plus précisément la porte ET, 330n, reçoit, d'une part, le signal général de commutation de relais de puissance COM RLY et, d'autre part, le signal de commutation de relais de puissance COM RLYn, associé à la voie de charge n, généré par le module d'ordonnancement.

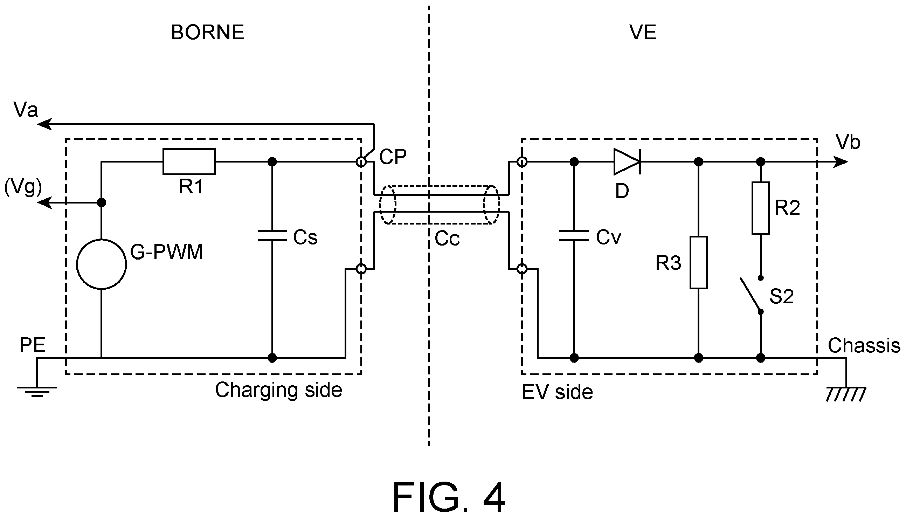

La Fig. 4 représente un exemple de connexion entre une carte de contrôle mode 3 et un véhicule électrique.

La partie gauche de la figure est relative au circuit de contrôle de la borne de recharge et la partie droite au circuit embarqué dans le véhicule électrique, un câble électrique Ce reliant le circuit de contrôle au circuit embarqué.

Du côté de la borne, la puissance électrique délivrée au véhicule est modulée grâce à une modulation de largeur d'impulsion faisant varier le rapport cyclique du signal d'alimentation AC fourni par le générateur G -PWM. Ce signal d'alimentation V_{g} est un signal alternatif de fréquence fixe, typiquement de 1 kHz, dont le niveau varie entre +12V et -12V. Du côté du véhicule le signal d'alimentation est redressé avant d'être appliqué à la batterie.

Le signal pilote CP sert à transmettre des informations de manière bidirectionnelle entre la borne et le véhicule électrique, et, pour cette raison, peut être qualifié de voie de contrôle.

Le circuit embarqué à bord du véhicule dispose de diviseurs résistifs permettant de diviser la tension appliquée au câble et de signaler la demande de charge de la batterie. En mesurant la tension du signal pilote CP, la borne de recharge est à même de connaître le niveau de charge du véhicule. L'état E correspond à un court-circuit du fil pilote à la terre, il conduit à un arrêt de la charge et une mise en défaut de la borne. Le signal pilote CP permet aussi de requérir du véhicule une mise en pause (état B1).

Le signal pilote CP permet en outre de signaler au véhicule une mise en pause (état A), une indisponibilité de la borne (état F, tension de -12 V appliquée par la borne) et, le cas échéant, grâce au rapport cyclique de la modulation PWM le courant maximal qu'il peut consommer en cours de charge.

L'homme du métier aura compris que, vu du côté de la borne, le signal pilote CP est celui fourni tour à tour par les véhicules connectés aux voies de charge alors que, vu des véhicules, le signal CP est celui fourni, soit par le module de contrôle lorsque le véhicule est en charge, soit par le circuit d'émulation de mode pause lorsque celui-ci n'est pas en charge. Le véhicule dont la voie de charge est commutée sur ledit circuit d'émulation n'interprète donc pas cette commutation comme une déconnexion intempestive de la borne mais comme une simple mise en pause de la charge, ne le faisant pas passer le circuit embarqué en état d'erreur.

Le circuit d'ordonnancement permet de gérer avantageusement la distribution séquentielle de la charge des différents véhicules avec une grande flexibilité.

Tout d'abord, le module d'ordonnancement sait déterminer en temps réel, à partir des signaux de mesure MES CP VEn, les véhicules qui sont effectivement branchés à la borne. Ainsi, dès qu'un véhicule est débranché ou branché, cet évènement peut être pris en compte dans la séquence de charge.

De manière générale, la séquence de charge est définie par une succession d'identifiants de voies de charge et d'intervalles de temps de charge associés, une voie de charge identifiée par un identifiant étant commutée sur le module de contrôle pendant l'intervalle de temps de charge associé et sur le circuit d'émulation de pause de charge sinon. Ainsi, une séquence de charge se présentera par exemple sous la forme {[*t*₁,*t*₂],*σ*(1)},{[*t*₂,*t*₃],*σ*(2)},..,{[*tᵢ*,*t*_{*i*+1}],*σ*(*i*)},... où *σ*(*i*)∈{1,...,*N*} est l'identifiant de la voie de charge commutée sur le mode de contrôle pendant l'intervalle de temps de charge [*tᵢ*,*t*_{*i*+1}].

Les durées Δ*tᵢ* = *t*_{*i*+1}-*tᵢ* et/ou les fréquences de récurrence des intervalles de charge pour les différentes voies sont avantageusement déterminées en fonction des profils de charge requis pour les différents véhicules.

Ainsi, par exemple, les durées des intervalles de charge seront choisies entre une valeur basse Δ*t*ₘᵢₙ et une valeur haute Δ*t*ₘₐₓ. La valeur basse pourra être déterminée à partir du nombre maximal de commutations que peut supporter une batterie par unité de temps, le cas échéant pour le type indiqué. La valeur maximale pourra être déterminée en fonction du nombre du nombre de véhicules branchés à la borne et du temps maximum autorisé pour un même véhicule entre deux charges successives.

A chaque branchement et déconnexion d'un véhicule à la borne de recharge, la séquence est réactualisée. Les durées de charge et/ou les fréquences de récurrence peuvent être ainsi adaptées en temps réel.

En particulier, si un véhicule identifié comme prioritaire (véhicule sanitaire par exemple) se branche à la borne, il lui sera affecté d'emblée le prochain intervalle de charge, l'intervalle alloué au véhicule en cours de charge dans la séquence pouvant en outre interrompu en faveur du véhicule prioritaire.

Les durées des intervalles de charge et/ou fréquences de récurrence pourront être également adaptées en fonction des durées de stationnement renseignées par les usagers auprès de la borne, soit par une interface HMI, soit via une liaison sans fil (Bluetooth, BLE, NFC, Wi-Fi, par exemple).

La fin de la charge d'un véhicule, si elle n'est pas programmée par l'utilisateur, ou simplement due à une déconnexion de la prise ou encore à l'arrivée d'un véhicule prioritaire, peut être décidée par la borne de recharge elle-même. Ainsi, par exemple, lorsque le courant de charge est inférieur à une valeur de seuil prédéterminée pendant un durée donnée, la charge du véhicule sur cette voie pourra être suspendue et l'intervalle de charge suivant dans la séquence démarrera aussitôt pour le véhicule correspondant.

Les suspensions de charge sont enregistrées par le module d'ordonnancement. Lorsque le nombre de suspensions de charge dépasse un premier seuil prédéterminé la durée de l'intervalle de charge alloué au véhicule pourra être réduite. Lorsque ce nombre franchit un second seuil prédéterminé, la charge du véhicule est interrompue (la session de charge est considérée comme terminé) et l'intervalle de charge dans la séquence est libéré pour les autres véhicules. Une déconnexion suivie d'une reconnexion est alors nécessaire pour relancer la charge sur cette voie. Pour certains modèles de véhicules, une stratégie de relance automatique peut être prévue.

Dans une variante de réalisation, la borne de recharge pourra être connectée à un réseau cellulaire (4G ou 5G par exemple) ou filaire (Ethernet, par exemple). L'usager pourra alors, après s'être identifié et authentifié auprès d'un serveur gérant les bornes de recharge, renseigner son profil de charge (niveau de priorité, préférence tarification heures creuses, temps de stationnement estimé, kilométrage à parcourir jusqu'à destination ou au prochain point de charge, caractéristiques de la batterie), le serveur transmettant ensuite à la borne les informations permettant au module d'ordonnancement. Le module d'ordonnancement pourra déterminer la séquence de charge optimale, au sens des critères renseignés dans les profils de charge.

La borne de recharge pourra en outre mesurer ou estimer un certain nombre de paramètres pour chaque voie de charge et pendant toute la session de charge d'un véhicule électrique, du branchement à sa déconnexion. L'évolution de ces paramètres au cours de la session pourra être consignée dans un journal de charge (*charging log*) destiné à être stocké localement et/ou dans une base de données hébergée par le serveur de gestion.

Alternativement, seul un bilan de session pourra être stocké localement et/ou transmis au serveur de gestion.

Ce bilan pourra notamment comprendre :
- le temps de charge accumulé, c'est-à-dire la somme des durées des intervalles de charge du véhicule sur toute la session ;
- l'énergie emmagasinée dans la batterie sur toute la session ;
- le courant de charge moyen sur toute la session ;
- la distance de roulage récupérée pour le véhicule en charge au terme de la session.

Que ce soit sur la base des journaux de charge ou simplement des bilans de sessions, la borne de recharge ou le serveur de gestion peut effectuer des statistiques pour optimiser son approvisionnement en énergie en tant que noeud d'un réseau électrique intelligent (*smart grid*) en sélectionnant par exemple la source d'alimentation la plus appropriée à l'instant considéré.

Dans un contexte de logement collectif ou de parking d'entreprise à emplacements dédiés, ou de manière plus générale lorsqu'un point de charge peut être associé de manière biunivoque à véhicule, une borne de recharge pourra apprendre elle-même (par exemple au moyen d'outils d'apprentissage automatique) le comportement des différents usagers connectés aux différents points de charge. Elle pourra notamment estimer les paramètres de la charge des véhicules sans que ceux-ci aient besoin d'être renseignés par les usagers.

D'autres modes de fonctionnement du module d'ordonnancement pourront être envisagés par l'homme du métier sans sortir pour autant du cadre de la présente invention.

## Revendications

1. Système de recharge pour véhicules électriques, ledit système de recharge comprenant au moins une borne de recharge (210), alimentée par au moins une source d'alimentation (200), ladite borne de recharge comprenant au moins un module de contrôle de charge monovoie (220), dans lequel il comprend en outre :
- un module de commutation de charge (260, 300) relié au module de contrôle de charge monovoie et recevant de celui-ci un signal de contrôle de charge (CP) sur une voie de contrôle commune (330), le module de commutation de charge comportant une pluralité de voies de charge (340n), chaque voie de charge comprenant une voie de contrôle de charge ;
- une pluralité de relais de puissance (370₁,... 370_{N}) commandés par le module de commutation de charge, chaque relais de puissance étant associé à une voie de charge et destiné à connecter, en position fermée, ou déconnecter, en position ouverte, la source d'alimentation à une batterie de l'un desdits véhicules électriques ;
le module de commutation comprenant :
- une pluralité de circuits d'émulation de pause de charge (310₁,... 310_{N}), chaque circuit d'émulation de mode pause de charge étant associé à une voie de contrôle de charge ;
- une pluralité de commutateurs (321₁,... 321_{N}), chaque commutateur étant associé à une voie de contrôle de charge et présentant un premier état de commutation dans lequel la voie de contrôle de charge est connectée à la voie de contrôle commune et un second état de commutation dans lequel cette voie de contrôle de charge est connectée au circuit d'émulation de pause de charge associé à ladite voie ;
- un module d'ordonnancement (350) contrôlant les états de commutation successifs des différents commutateurs (321₁,... 321_{N}) et des différents relais de puissance (370₁,... 370_{N}) pendant une séquence d'intervalles de charge, de sorte que, pendant un intervalle de charge attribué à une voie de charge, le commutateur associé à la voie de contrôle de charge correspondante soit dans le premier état de commutation et les autres commutateurs de la pluralité soient dans le second état de commutation, et que relais de puissance associé à la voie de charge soit en position fermée, les relais de puissance associés aux autres voies de la pluralité étant en position ouverte.

2. Système de recharge pour véhicules électriques selon la revendication 1, **caractérisé en ce que** le module de contrôle monovoie est un module de contrôle mode 3 tel que défini dans la norme IEC 61851-1.

3. Système de recharge pour véhicules électriques selon la revendication 2, **caractérisé en ce que** chaque circuit d'émulation de pause de charge comporte une borne reliée à une tension d'alimentation de +12V à travers une résistance de rappel, ladite borne étant connectée à la voie de contrôle de charge au moyen du commutateur associé à cette voie lorsque ce dernier est dans le second état de commutation.

4. Système de recharge pour véhicules électriques selon la revendication 2, **caractérisé en ce que** chaque circuit d'émulation de pause de charge comporte une source de courant et une résistance de rappel montée en parallèle entre la masse et une borne commune, ladite borne commune étant connectée à la voie de contrôle de charge au moyen du commutateur associé à cette voie lorsque ce dernier est dans le second état de commutation.

5. Système de recharge selon l'une des revendications précédentes, **caractérisé en ce que** le module d'ordonnancement reçoit des mesures de tension sur chacune des voies de contrôle de charge (MES CP VE₁,..., MES CP VE _{N}) et en déduit les véhicules branchés à la borne de recharge et, par suite, les voies de charge à commuter pendant ladite séquence d'intervalles de charge.

6. Système de recharge selon l'une des revendications précédentes, **caractérisé en ce que** le module d'ordonnancement détermine les durées des intervalles de charge attribués aux différentes voies et/ou leurs fréquences de récurrence respectives en fonction au moins du nombre de véhicules branchés à la borne de recharge.

7. Système de recharge selon la revendication 6, **caractérisé en ce que** le module d'ordonnancement déduit des mesures de tension sur chacune des voies de contrôle de charge (MES CP VE₁,..., MES CP VE _{N}) les durées des intervalles de charge attribués aux différentes voies et/ou leurs fréquences de récurrence respectives.

8. Système de recharge selon l'une des revendications précédentes, **caractérisé en ce que** le module d'ordonnancement détermine les durées des intervalles de charge attribués aux différentes voies et/ou leurs fréquences de récurrence respectives en fonction d'au moins un critère parmi un ensemble de critères comprenant un niveau de priorité demandé pour la charge, un niveau de tarification horaire de la fourniture d'énergie, un temps de stationnement estimé du véhicule électrique, un kilométrage à parcourir jusqu'à destination du prochain point de charge, les caractéristiques de la batterie à recharger.

9. Système de recharge selon la revendication 8, **caractérisé en ce que** la borne de recharge est équipée d'une interface homme machine permettant à un usager de renseigner au moins un critère dudit ensemble de critères.

10. Système de recharge selon la revendication 8, **caractérisé en ce que** la borne de recharge est connectée à travers un réseau filaire ou sans fil, à un serveur de gestion de charge, auprès duquel un usager peut s'identifier et s'authentifier, puis renseigner un profil de charge comprenant au moins un critère dudit ensemble de critères, ledit profil de charge étant ensuite transmis à la borne de recharge.

11. Système de recharge selon la revendication 10, **caractérisé en ce que** la borne de recharge stocke les valeurs d'une pluralité de paramètres de charge au cours d'une session de charge d'un véhicule et stocke un journal de charge comprenant un historique de ces paramètres dans une mémoire locale et/ou dans une base de données hébergée par le serveur de gestion.

## Patentansprüche

1. Ladesystem für Elektrofahrzeuge, wobei das Ladesystem mindestens eine Ladestation (210) umfasst, die von mindestens einer Stromversorgungsquelle (200) mit Strom versorgt wird, wobei die Ladestation mindestens ein einkanaliges Ladesteuerungsmodul (220) umfasst, wobei es ferner Folgendes umfasst:
- ein Ladeschaltmodul (260, 300), das mit dem einkanaligen Ladesteuerungsmodul verbunden ist und von diesem ein Ladesteuerungssignal (CP) auf einem gemeinsamen Steuerkanal (330) empfängt, wobei das Ladeschaltmodul eine Vielzahl von Ladekanälen (340n) umfasst, wobei jeder Ladekanal einen Ladesteuerungskanal umfasst;
- eine Vielzahl von Leistungsrelais (370₁, ... 370_{N}), die vom Ladeschaltmodul gesteuert werden, wobei jedes Leistungsrelais einem Ladekanal zugeordnet und dazu bestimmt ist, die Stromversorgungsquelle in der geschlossenen Position mit einer Batterie eines der Elektrofahrzeuge zu verbinden oder in der offenen Position davon zu trennen;
wobei das Schaltmodul Folgendes umfasst:
- eine Vielzahl von Ladepausen-Emulationsschaltungen (310₁, ... 310_{N}), wobei jede Ladepausenmodus-Emulationsschaltung einem Ladesteuerungskanal zugeordnet ist;
- eine Vielzahl von Schaltern (321₁, ... 321_{N}), wobei jeder Schalter einem Ladesteuerungskanal zugeordnet ist und einen ersten Schaltzustand, in dem der Ladesteuerungskanal mit dem gemeinsamen Steuerungskanal verbunden ist, und einen zweiten Schaltzustand aufweist, in dem der Ladesteuerungskanal mit der dem Kanal zugeordneten Ladepausen-Emulationsschaltung verbunden ist;
- ein Ablaufsteuerungsmodul (350), das die aufeinanderfolgenden Schaltzustände der verschiedenen Schalter (321₁, ... 321_{N}) und der verschiedenen Leistungsrelais (370₁, ... 370_{N}) während einer Abfolge von Ladeintervallen steuert, so dass sich während eines einem Ladekanal zugeordneten Ladeintervalls der dem entsprechenden Ladesteuerungskanal zugeordnete Schalter im ersten Schaltzustand befindet und die anderen Schalter der Vielzahl sich im zweiten Schaltzustand befinden, und dass die dem Ladekanal zugeordneten Leistungsrelais sich in dergeschlossenen Position befinden, während sich die den anderen Kanälen der Vielzahl zugeordneten Leistungsrelais in der geöffneten Position befinden.

2. Ladesystem für Elektrofahrzeuge nach Anspruch 1, **dadurch gekennzeichnet, dass** das einkanalige Steuerungsmodul ein Modus-3-Steuerungmodul gemäß der Norm IEC 61851-1 ist.

3. Ladesystem für Elektrofahrzeuge nach Anspruch 2, **dadurch gekennzeichnet, dass** jede Ladepausen-Emulationsschaltung einen Anschluss umfasst, der über einen Pullup-Widerstand mit einer Versorgungsspannung von +12 V verbunden ist, wobei der Anschluss mittels des dem Kanal zugeordneten Schalters mit dem Ladesteuerungskanal verbunden ist, wenn sich dieser im zweiten Schaltzustand befindet.

4. Ladesystem für Elektrofahrzeuge nach Anspruch 2, **dadurch gekennzeichnet, dass** jede Ladepausen-Emulationsschaltung eine Stromquelle und einen Pullup-Widerstand umfasst, die parallel zwischen Masse und einem gemeinsamen Anschluss geschaltet sind, wobei der gemeinsame Anschluss mittels des dem Kanal zugeordneten Schalters mit dem Ladesteuerungskanal verbunden ist, wenn sich dieser im zweiten Schaltzustand befindet.

5. Ladesystem nach einem der vorhergehenden Ansprüche, **dadurch gekennzeichnet, dass** das Ablaufsteuerungsmodul Spannungsmessungen auf jedem der Ladesteuerungskanäle (MES CP VE₁, ..., MES CP VE_{N}) empfängt und aus diesen auf die an die Ladestation angeschlossenen Fahrzeuge und folglich auf die Ladekanäle schließt, die während der Abfolge von Ladeintervallen umgeschaltet werden sollen.

6. Ladesystem nach einem der vorhergehenden Ansprüche, **dadurch gekennzeichnet, dass** das Ablaufsteuerungsmodul die Dauern der den verschiedenen Kanälen zugewiesenen Ladeintervalle und/oder deren jeweilige Wiederholhäufigkeit in Abhängigkeit von mindestens der Anzahl der an die Ladestation angeschlossenen Fahrzeuge bestimmt.

7. Ladesystem nach Anspruch 6, **dadurch gekennzeichnet, dass** das Ablaufsteuerungsmodul aus den Spannungsmessungen an jedem der Ladesteuerungskanäle (MES CP VE₁, ... , MES CP VE_{N}) auf die Dauern der den verschiedenen Kanälen zugewiesenen Ladeintervalle und/oder deren jeweilige Wiederholhäufigkeit schließt.

8. Ladesystem nach einem der vorangehenden Ansprüche, **dadurch gekennzeichnet, dass** das Ansteuerungsmodul die Dauern der den verschiedenen Kanälen zugewiesenen Ladeintervalle und/oder deren jeweilige Wiederholhäufigkeit in Abhängigkeit von mindestens einem Kriterium aus einem Kriteriensatz bestimmt, der eine für die Ladung geforderte Prioritätsstufe, ein stündliches Preisniveau für die Energieversorgung, eine geschätzte Parkzeit des Elektrofahrzeugs, eine bis zum Ziel des nächsten Ladepunkts zurückzulegende Kilometerzahl und die Eigenschaften der aufzuladenden Batterie umfasst.

9. Ladesystem nach Anspruch 8, **dadurch gekennzeichnet, dass** die Ladestation mit einer Mensch-Maschine-Schnittstelle ausgestattet ist, die es einem Benutzer ermöglicht, mindestens ein Kriterium aus dem Kriteriensatz einzugeben.

10. Ladesystem nach Anspruch 8, **dadurch gekennzeichnet, dass** die Ladestation über ein drahtgebundenes oder drahtloses Netzwerk mit einem Ladeverwaltungsserver verbunden ist, auf dem sich ein Benutzer identifizieren und authentifizieren kann, um dann ein Ladeprofil einzugeben, das mindestens ein Kriterium aus dem Kriteriensatz umfasst, wobei das Ladeprofil dann an die Ladestation übertragen wird.

11. Ladesystem nach Anspruch 10, **dadurch gekennzeichnet, dass** die Ladestation die Werte einer Vielzahl von Ladeparametern während einer Ladesitzung eines Fahrzeugs speichert und ein Ladeprotokoll, das eine Historie der Parameter umfasst, im lokalen Speicher und/oder in einer vom Verwaltungsserver gehosteten Datenbank speichert.

## Claims

1. Charging system for electric vehicles, said recharging system comprising at least one recharging station (210), supplied by at least one supply source (200), said recharging station comprising at least one single-channel charging control module (220), wherein it furthermore comprises:
- a charging switching module (260, 300) connected to the single-channel charging control module and receiving therefrom a charging control signal (CP) on a common control channel (330n), each charging channel comprising a charging control channel;
- a plurality of power relays (370₁, ... 370_{N}) controlled by the charging switching module, each power relay being associated with a charging channel and intended to connect, in the closed position, on disconnect, in the open position, the supply source to a battery of one of said electric vehicles;
the switching module comprising:
- a plurality of charging pause emulation circuits (310₁, ... 310_{N}), each charging pause mode emulation circuit being associated with a charging control channel;
- a plurality of switches (321₁, ... 321_{N}), each switch being associated with a charging control channel and having a first switching state wherein the charging control channel is connected to the common control channel and a second switching state wherein this charging control channel is connected to the charging pause emulation circuit associated with said channel;
- a sequencing module (350) controlling the successive switching states of the various switches (321₁, ... 321_{N}) and of the various power relays (370₁, ... 370_{N}) during a sequence of charging intervals, so that, during a charging interval attributed to a charging channel, the switch associated with the corresponding charging control channel is in the first switching state and the other switches in the plurality are in the second switching state, and so that the power relay associated with the charging channel is in the closed position, the power relays associated with the other channels in the plurality being in the open position.

2. Charging system for electric vehicles according to claim 1, **characterized in that** the single-channel control module is a mode control module 3 as defined in IEC 61851-1.

3. Recharging system for electric vehicles according to claim 2, **characterized in that** each charging pause emulation circuit includes a terminal connected to a supply voltage of +12V through a return resistor, said terminal being connected to the charging control channel by means of the switch associated with this channel when said switch is in the second switching state.

4. Charging system for electric vehicles according to claim 2, **characterized in that** each charging pause emulation circuit includes a current source and a return resistor connected in parallel between the earth and a common terminal, said common terminal being connected to the charging control channel by means of the switch associated with this channel when said switch is in the second switching state.

5. Recharging system according to one of the preceding claims, **characterized in that** the sequencing module receives voltage measurements on each of the charging control channels (MES CP VE₁, ..., MES CP VE _{N}) and deduces therefrom the vehicles connected to the recharging station and, as a result, the charging channels to switch during said sequence of charging intervals.

6. Recharging system according to one of the preceding claims, **characterized in that** the sequencing module determines the durations of the charging intervals attributed to the various channels and/or their respective frequencies of recurrence according at least to the number of vehicles connected to the recharging station.

7. Recharging system according to claim 6, **characterized in that** the sequencing module deduces, from the voltage measurements on each of the charging control channels (MES CP VE₁, ..., MES CP VE _{N}), the durations of the charging intervals attributed to the various channels and/or their respective frequencies of recurrence.

8. Recharging system according to one of the preceding claims, **characterized in that** the sequencing module determines the durations of the charging intervals attributed to the various channels and/or their respective frequencies of recurrence according to at least one criterion from a set of criteria comprising a priority level requested for the charging, a timed pricing level for the energy supply, an estimated parking time of the electric vehicle, a distance to be travelled to the next charging point, and the characteristics of the battery to be recharged.

9. Recharging system according to claim 8, **characterized in that** the recharging station is equipped with a man-machine interface enabling a user to enter at least one criterion from said set of criteria.

10. Recharging system according to claim 8, **characterized in that** the recharging station is connected through a cable or wireless network, to a charging management server, to which a user can identify and authenticate themselves, and then enter a charging profile comprising at least one criterion from said set of criteria, said charging profile then being transmitted to the recharging station.

11. Recharging system according to claim 10, **characterized in that** the recharging station stores the values of a plurality of charging parameters during a vehicle charging session and stores a charging log comprising a history of these parameters in a local memory and/or in a database hosted by the management server.
